# EUROPEAN PATENT APPLICATION

(11) **EP 4 738 128 A1**
(43) Date of publication of application: **06.05.2026**
(21) Application number: 25186049.0
(22) Date of filing: 27.06.2025
(51) Int. Cl.: G06F 12/02

(54) **STORAGE DEVICE, OPERATION METHOD THEREOF AND COMPUTING SYSTEM INCLUDING THE STORAGE DEVICE**

(30) Priority: 01.11.2024 KR 20240153291; 24.12.2024 KR 20240195628
(71) Applicant: Samsung Electronics Co., Ltd., Suwon-si, Gyeonggi-do 16677 (KR)
(72) Inventor: LEE, Sanggeol, 16677 Suwon-si (KR); LEE, Seulki, 16677 Suwon-si (KR)
(74) Representative: Marks & Clerk LLP

(57) **Abstract**

A storage device includes a nonvolatile memory device configured to store data, a storage interface connected to a host device, and a storage controller configured to receive a command from the host device through the storage interface and to control the nonvolatile memory device in response to the command. When the storage controller receives a command sequence from the host device more than a reference number of times and command sequence includes a first write command instructing a first write operation, a second write command instructing a second write operation, and a flush command instructing a flush operation sequentially, the storage controller executes the first write command by sequential write to store first write data in a first memory region of the nonvolatile memory device, and executes the second write command by random write to store second write data in the second memory region of the nonvolatile memory device.

## Description

### BACKGROUND

Example embodiments of the present disclosure relate to a storage device, an operation method thereof and a computing system including the storage device.

A storage device may be connected to a host device, may store data transmitted from the host device, and may transmit the stored data to the host device. The storage device may include a memory device and a storage controller, and the storage controller may be connected to the host device through a predetermined interface. The host device connected to the storage device may provide a recall function of generating snapshot data by capturing data of a running screen and storing the generated data in the storage device in order to improve user convenience. By storing the snapshot data generated from the host device in the storage device, a work history may be provided to a user. However, in the process of storing the snapshot data in the storage device, a write amplification factor (WAF) of the storage device may increase, such that lifespan may be shortened or reliability of the storage device may be deteriorated. Therefore, it is desirable to reduce the WAF of the storage device even when the process of storing the snapshot data is performed.

### SUMMARY

Example embodiments of the present disclosure are to provide a storage device which may reduce an increase in WAF and may improve lifespan and reliability by storing snapshot data generated by activating a recall function by a host device as sequential write rather than random write, an operation method thereof and a computing system including the storage device.

According to an example embodiment of the present disclosure, a storage device includes a nonvolatile memory device configured to store data, a storage interface connected to an external host device, and a storage controller configured to receive a command from the external host device through the storage interface and to control the nonvolatile memory device in response to the command. When the storage controller receives a command sequence from the external host device more than a reference number of times and the command sequence includes a first write command instructing a first write operation, a second write command instructing a second write operation, and a flush command instructing a flush operation sequentially, the storage controller executes the first write command by sequential write to store first write data in a first memory region of the nonvolatile memory device, and executes the second write command by random write to store second write data in the second memory region of the nonvolatile memory device.

According to an example embodiment of the present disclosure, an operation method of a storage device includes receiving a command sequence including a first write command, a second write command, and a flush command from an external host device, comparing the number of times the command sequence is received with a reference number, comparing the remaining capacity of a system partition in which an operating system is installed in a memory device included in the storage device with a reference free capacity when the number of times receiving the command sequence is equal to or greater than the reference number, and when the remaining capacity is greater than or equal to the reference free capacity, storing first write data in a first memory region of the memory device by sequential write in response to the first write command, and storing second write data in a second memory region of the memory device by random write in response to the second write command.

According to an example embodiment of the present disclosure, a computing system includes a storage device and a host device. The storage device includes a memory device, a storage interface, and a storage controller. The host device includes a processor and a host interface connected to the storage interface. The processor executes a boot process by loading an operating system installed in a system partition of the memory device, activates a recall function of generating snapshot data and metadata obtained by capturing a screen displayed by an application executing on the host device, and transmits to the storage device a command sequence including a first write command instructing writing of the snapshot data, and a second write command instructing writing of the metadata to the storage device. The storage controller stores the snapshot data in a first memory region of the system partition by sequential write, stores the metadata in a second memory region of the system partition by random write, and prohibits migration of the metadata written in the second memory region.

At least some of the above and other features of the invention are set out in the claims.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a diagram illustrating a storage device according to an example embodiment of the present disclosure;
FIGS. 2 and 3 are block diagrams illustrating a computing system including a storage device according to an example embodiment of the present disclosure;
FIG. 4 is a diagram illustrating operations of a computing system according to an example embodiment of the present disclosure;
FIGS. 5 to 7 are diagrams illustrating operations of a storage device according to an example embodiment of the present disclosure;
FIG. 8 is a diagram illustrating operations of a computing system according to an example embodiment of the present disclosure;
FIG. 9 is a diagram illustrating operations of a computing system according to an example embodiment of the present disclosure;
FIG. 10 is a diagram illustrating operations of a storage device according to an example embodiment of the present disclosure;
FIGS. 11A, 11B and 12 are diagrams illustrating operations of a storage device according to an example embodiment of the present disclosure;
FIG. 13 is a diagram illustrating an operation method of a storage device according to an example embodiment of the present disclosure; and
FIGS. 14 and 15 are diagrams illustrating a memory device included in a storage device according to an example embodiment of the present disclosure.

### DETAILED DESCRIPTION

Hereinafter, embodiments of the present disclosure will be described as below with reference to the accompanying drawings.

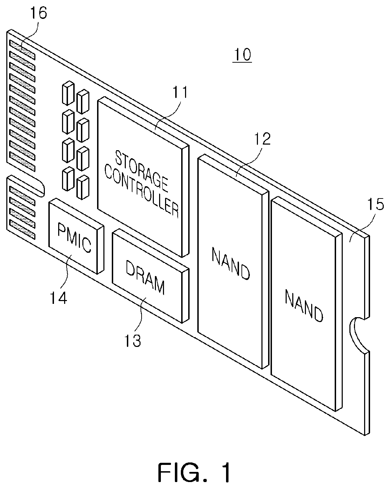

FIG. 1 is a diagram illustrating a storage device according to an example embodiment.

In the example embodiments described with reference to FIG. 1, a storage device 10 may be configured as a solid state drive (SSD) device. Referring to FIG. 1, the storage device 10 may have a form factor in accordance with the M.2 standard and may communicate with an external host device, such as a central processing device, a system-on-chip, an application processor, or the like, in accordance with the PCI-Express protocol.

The storage device 10 may include a storage controller 11, memory devices 12 (e.g. NAND memory devices), a random access memory (RAM) device 13 (e.g. Dynamic RAM (DRAM)), a power circuit 14 (e.g. a power management integrated circuit (PMIC)), and a system substrate 15. The storage controller 11, the memory devices 12, the RAM device 13, and the power circuit 14 may be electrically connected to each other by interconnection patterns formed on the system substrate 15.

The system substrate 15 may include a connector 16 including a plurality of pins for connection with the host device. The number of the plurality of pins included in the connector 16 and arrangement thereof may vary depending on an interface defining a connection method between the storage device 10 and the host device. In example embodiments, the storage device 10 may communicate with an external host according to one of interfaces, such as a universal serial bus (USB), peripheral component interconnect express (PCI-Express), serial advanced technology attachment (SATA), or M-Phy for universal flash storage (UFS). For example, the storage device 10 according to an example embodiment illustrated in FIG. 1 may communicate with the host device in accordance with the PCI-Express protocol.

The storage device 10 may operate by power supplied from the host device through the connector 16. The power circuit 14 of the storage device 10 may be a power management integrated circuit (PMIC) generating internal voltages necessary for operation of the storage controller 11, the memory devices 12, and the RAM device 13 using external voltages supplied by the host device through the connector 16.

The storage controller 11 may write data in the memory devices 12 or may read data from the memory devices 12 in response to a command received from the host device. For example, the storage device 10 may include a plurality of memory devices 12 mounted on the system substrate 15, and each of the plurality of memory devices 12 may include one or more memory chips. Each of the memory chips may have nonvolatile properties such that the stored data may be maintained even when power is cut off, and may be configured as a NAND memory chip.

The storage device 10 according to an example embodiment illustrated in FIG. 1 may include a RAM device 13 operating as a buffer memory to alleviate a difference in speeds between the memory devices 12 in which data is stored and the host device. For example, the RAM device 13 may be a dynamic random access memory (DRAM) and may operate as a cache memory and may provide a space for temporarily storing data in a control operation for the memory devices 12. In an example embodiment illustrated in FIG. 1, the storage controller 11 may further include a DRAM controller for controlling the RAM device 13 in addition to the NAND controller for controlling the memory devices 12. When the storage device 10 does not include the RAM device 13, a portion of a storage space of the RAM device included in the host device may be allocated to the storage controller 11 and the storage controller 11 may use the allocated storage space as the RAM device 13.

The P/E cycle and WAF of each of the memory devices 12 may affect lifespan of the storage device 10. The WAF may be a phenomenon where the amount of data physically written to storage is greater than the amount intended to be written. The WAF may be the ratio of data physically written to data instructed by the host for writing. For example, in a write operation of storing data in the memory devices 12, a write operation targeting data of a larger capacity than a request from the host device may be executed. For example, when an operation of storing data of a small capacity received from the host device in the memory devices 12 by random write is frequently executed, a background operation such as garbage collection may be executed in the storage device 10, and accordingly, the WAF of the memory devices 12 may increase. That is, background operations, such as garbage collection, may increase the number of write operations relative to the amount of data instructed for writing by the host, and therefore increase the WAF. When referring to "capacity" of data, it will be appreciated that this may refer to the size of the data and/or the storage capacity required to store the data.

Recently, as one of functions of an operating system operating a host device, a recall function of capturing a screen displayed by an application executing on a host device in the form of snapshot data, storing the captured snapshot data in the storage device 10 and providing the data to a user has been suggested. The snapshot data generated by this function may generally have a small capacity of less than 1 MB, and may be stored in the storage device 10 together with metadata having a capacity of several tens of KB.

For example, the host device may instruct a write operation of storing snapshot data and metadata by random write operation to the storage device 10. Accordingly, while the recall function is activated, snapshot data and metadata may be continuously stored in the storage device 10 by the random write operation, and accordingly, the WAF of the storage device 10 may be increased and lifespan of the storage device 10 may be reduced.

In an example embodiment, when the recall function is enabled in an operating system driving the host device, the host device may determine whether a write operation instructed to the storage device 10 is a write operation for data generated by the recall function. For example, the storage controller 11 may determine whether data transmitted together with the write command is data generated by the recall function, based on a write command received from the host device.

The storage controller 11 may write snapshot data to the memory devices 12 by sequential write rather than random write when it is determined that a write operation instructed by the host device is a write operation for data generated by the recall function. A sequential write operation may have a lower WAF than a random write operation, as it may require less garbage collection. Accordingly, the increase in WAF of the storage device 10 due to activation of the recall function may be reduced, and reliability and lifespan of the storage device 10 may be improved.

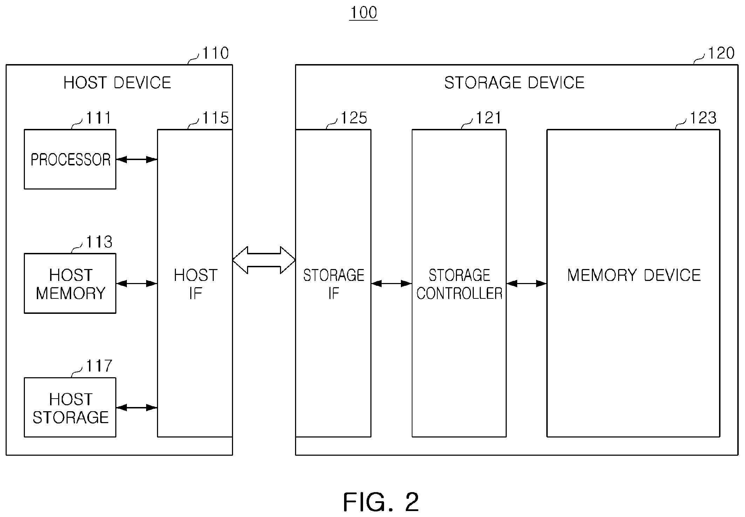

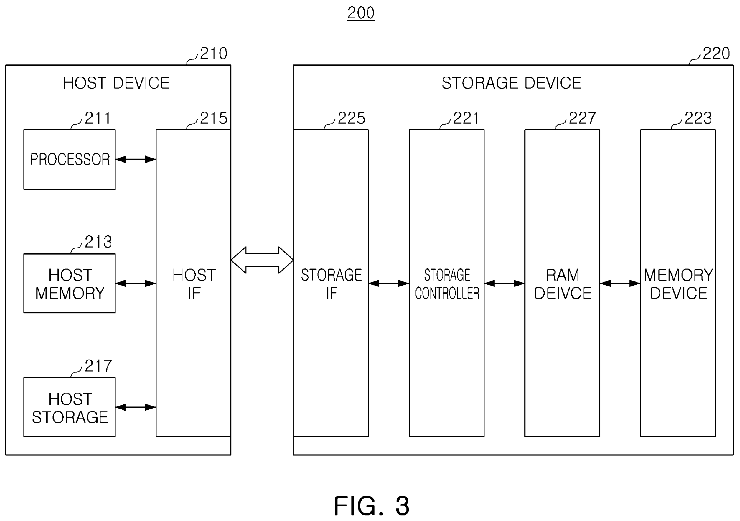

FIGS. 2 and 3 are block diagrams illustrating a computing system including a storage device according to an example embodiment.

Referring to FIG. 2, a computing system 100 according to an example embodiment may include a host device 110 and a storage device 120. The host device 110 may include a processor 111, a host memory 113, a host interface 115, and a host storage 117. The storage device 120 may include a storage controller 121, a memory device 123, and a storage interface 125.

The host device 110 may be configured to supply power to the storage device 120 and to control operation of the storage device 120, and may be implemented as a desktop computer, a laptop computer, a server, a smartphone, a tablet PC, or the like. The host device 110 and the storage device 120 may be connected to each other through a predetermined interface, and for example, the host device 110 and the storage device 120 may be connected to each other through an interface such as USB, PCI-Express, SATA, or M-Phy for UFS. The host device 110 may include the host interface 115 supporting the corresponding interface, and the storage device 120 may include the storage interface 125 supporting the corresponding interface.

The processor 111 of the host device 110 may control overall operation of the computing system 100. For example, the processor 111 may be implemented as a general-purpose processor, a dedicated processor, or an application processor. The processor 111 may include one or more cores, and may further include a separate controller for controlling the host memory 113, the host storage 117, and the storage device 120. In example embodiments, the processor 111 may include an accelerator, which is a dedicated circuit for high-speed data operations such as an artificial intelligence (AI) data operation.

The host memory 113 may be used as a main memory device of the computing system 100, and may include a volatile memory such as static random access memory (SRAM) and/or DRAM. However, in example embodiments, the host memory 113 may include nonvolatile memory such as a flash memory, phase change random access memory (PRAM), and resistive random access memory (RRAM). In an example embodiment, the host memory 113 may be implemented as a single package with the processor 111.

The host storage 117 may be a device including a nonvolatile memory and may provide relatively large storage capacity as compared to the host memory 113. The host storage 117 may be implemented as a solid state drive (SSD) and/or an HDD (hard disk drive). The host memory 113 and the host storage 117 may be connected to the processor 111 through the host interface 115 and may operate in response to a command from the processor 111.

The storage device 120 may be implemented to be separated from the host device 110, and the storage device 120 may conform to a standard specification such as universal flash storage (UFS), embedded multi-media card (eMMC), or non-volatile memory express (NVMe). The storage device 120 may include a memory device 123 implemented as a nonvolatile memory. The storage controller 121 may store data received from the host device 110 through the storage interface 125 in the memory device 123, and may read data stored in the memory device 123 and transmit the data to the host device 110 through the storage interface 125.

Referring to FIG. 3, a computing system 200 according to an example embodiment may include a host device 210 and a storage device 220. The host device 210 may include a processor 211, a host memory 213, a host interface 215, and a host storage 217. The storage device 220 may include a storage controller 221, a memory device 223, a storage interface 225, and a RAM device 227.

In the computing system 200 according to an example embodiment illustrated in FIG. 3, the components other than the RAM device 227 may be similar to the computing system 100 according to an example embodiment described with reference to FIG. 2. The RAM device 227 may be connected between the storage controller 221 and the memory device 223, and may be implemented as a memory having a faster operating speed than that of the memory device 223, such as DRAM, PRAM, or RRAM. By connecting the RAM device 227 between the storage controller 221 and the memory device 223, degradation in data transmission speed occurring between the storage controller 221 and the memory device 223 may be alleviated. Alternatively, by loading data required for the storage controller 221 to control the memory device 223 into the RAM device 227, performance of the storage device 220 may be improved.

In an example embodiment, the host devices 110 and 210 may operate by an operating system loaded during a boot process, and the operating system may be installed in memory devices 123 and 223 of the storage devices 120 and 220. In example embodiments, the memory devices 123 and 223 may include one or more partitions, and the partition in which the operating system is installed may be defined as a system partition.

In an example embodiment, the operating system installed in the storage devices 120 and 220 may support a recall function of capturing data displayed by an application executing in the host devices 110 and 210 and storing the data in the storage devices 120 and 220. For example, the data generated by the recall function may include first write data and second write data having capacity smaller than capacity of the first write data. The first write data may be snapshot data generated by capturing a screen displayed by an application executing on the host devices 110 and 210, and the second write data may be metadata.

The first write data may have capacity (e.g. size) of tens to hundreds of KB, and the second write data may have capacity of several to tens of KB. The host devices 110 and 210 in which the recall function is activated may generate a first write command to write the first write data in the memory devices 123 and 223, and a second write command to write the second write data in the memory devices 123 and 223, and may transmit the commands to the storage devices 120 and 220.

When the storage controller 121 or 221 executes the entirety of write operations executed in response to the first write command and the second write command by random write, the number of times background operations, such as garbage collection, are executed in the storage device 120 or 220 may increase, and accordingly, the WAF of the storage device 120 or 220 may increase. In an example embodiment, an increase in the WAF of the storage device 120 or 220 may be reduced by executing the first write operation executed in response to the first write command by the storage controller 121 or 221 by sequential write rather than random write. For example, even when the first write command received from the host device 110 or 210 instructs random write, the storage controller 121 or 221 may write the first write data in the system partition by sequential write.

The first write data and the second write data generated by the recall function may be stored in a recall space included in the system partition in which the operating system is installed. The host devices 110 and 210 may determine whether to activate the recall function depending on capacity of a free space of the system partition.

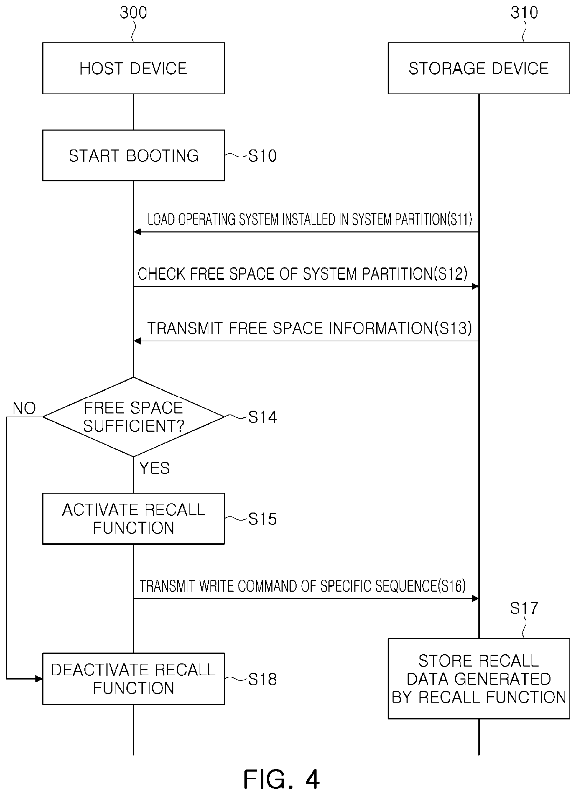

FIG. 4 is a diagram illustrating operations of a computing system according to an example embodiment.

Referring to FIG. 4, the computing system according to an example embodiment may include a host device 300 and a storage device 310. As described above, the host device 300 and the storage device 310 may be connected to each other by an interface such as PCI-Express, USB, SATA, M-Phy for UFS, or the like, and the storage device 310 may store data or may output stored data in response to a control command received from the host device 300.

An operating system operating the computing system including the host device 300 may be installed in the storage device 310. A memory device included in the storage device 310 may be logically divided into a plurality of partitions, in example embodiments, and a partition in which the operating system is installed may be defined as a system partition.

When the computing system is powered on, the host device 300 may start booting (S10). When the boot process starts, the host device 300 may load the operating system installed in the system partition of the storage device 310 (S11). The loaded operating system may be loaded into a storage space defined as the main memory of the host device 300, such as DRAM.

When the operating system is loaded, the host device 300 may execute various applications supported by the operating system in response to an instruction from a user. For example, the operating system operating the computing system may support a recall function of capturing and storing a screen displayed on a display of the computing system by an application executed in the host device 300. When the computing system is booted, the operating system may transmit a request for confirmation of free space of the system partition to the storage device 310 to determine whether to activate the recall function (S12). The storage controller of the storage device 310 may transmit free space information of the system partition in which the operating system is installed to the host device 300 in response to the request received from the host device 300 in operation S12 (S13).

The host device 300 may determine whether the free space of the system partition is sufficient (S14). When the free space is determined to be sufficient in operation S14 (YES), the recall function may be activated by the operating system running on the host device 300 (S15). As the recall function is activated, the host device 300 may capture the screen displayed on the display by the application currently executing at a predetermined time interval and may generate recall data. The generated recall data may be transmitted to the storage device 310 by a write command of a specific sequence (S16). When the free space of the system partition is determined to be insufficient in operation S14 (NO), the operating system running on the host device 300 may deactivate the recall function (S18).

The storage device 310 receiving the write command in a specific sequence in operation S16 may store the recall data generated by the recall function (S17). In an example embodiment, the recall data may include snapshot data generated by capturing a screen displayed on a display of the computing system, and metadata. The metadata may include data for managing the snapshot data, and may include, for example, mapping information used to convert a logical address into a physical address in a system partition of the storage device 310.

The snapshot data may be data corresponding to an image captured from a screen displayed on a display. For example, the snapshot data may include image data captured from a screen, or data converted into text by applying optical character recognition (OCR) to the captured image of the screen. The snapshot data may generally have capacity greater than the metadata.

The write command transmitted in operation S16 to store the recall data generated by the recall function in the storage device 310 may include a first write command for writing the snapshot data, and a second write command for writing the metadata in sequence. In example embodiments, a flush command transmitted to the storage device 310 after the second write command may be further included in the write command transmitted in operation S16. The flush command may be a command instructing a flush operation to move data stored in a RAM device in the storage device 310 or a host memory allocated and used by the storage device 310 from the host device 300 to a nonvolatile memory device in the storage device 310.

The storage controller may determine whether the write command has a specific sequence that indicates a write command for a recall function (e.g. for storing recall data). For instance, the storage controller may determine whether the write commend received in operation S16 includes a first write command for writing first data, a second write command for writing second data and a flush command. For instance, the storage controller may determine whether the write command received in operation S16 includes a first write command instructing a first write operation for the first write data having capacity of tens to hundreds of KB, a second write command instructing a second write operation for the second write data having capacity of several to tens of KB, and a flush command instructing a flush operation in sequence. The first write data may be the snapshot data described above, and the second write data may be the metadata described above.

When the write command received in operation S16 includes the first write command, the second write command, and the flush command in sequence, the storage controller may determine that the first write data and the second write data to be written by the write command received in operation S16 are recall data generated by the recall function. When the first write data and the second write data are determined to be recall data, the storage controller may execute a sequential write operation to write the first write data in a first memory region (e.g. of the storage device), and may execute a random write operation and may write the second write data in a second memory region (e.g. of the storage device).

Each of the first memory region and the second memory region may be a region defined in a nonvolatile memory device included in the storage device 310. For example, the first memory region may be a memory region controlled by one of multilevel cell (MLC), triple level cell (TLC), and quad level cell (QLC) methods, and the second memory region may be a memory region controlled by a single level cell (SLC) method. For instance, the first memory region may comprise one or more of MLC memory cells, TLC memory cells and QLC memory cells. For instance, the second memory region may comprise SLC memory cells.

Generally, data transmitted from the host device 300 to the storage device 310 along with a write command may be preferentially stored in the second memory region operating as a buffer region and may move to the first memory region by a migration policy (e.g. through a background operation). However, when the recall function is activated, the write command in operation S16 may be transmitted to the storage device 310 at an interval of several seconds to several tens of seconds, and the write operation may be executed. Accordingly, when the method of preferentially storing the first write data in the second memory region and moving the data to the first memory region is adopted, the WAF may significantly increase due to the background operation of the storage device 310, such that lifespan and/or reliability may deteriorate.

In an example embodiment, based on the command sequence of the write command transmitted from the host device 300, it may be determined whether the data to be written by the write command is recall data, and when it is determined that the data is recall data, the first write data, which is snapshot data having relatively large capacity, may be written directly in the first memory region. Accordingly, the number of times the background operation of the storage device 310 is executed may be reduced such that the increase in WAF may be reduced.

Also, in an example embodiment, regardless of the instruction from the host device 300, the write operation of writing the first write data in the first memory region may be executed in a sequential write manner. Accordingly, by reducing the number of times the background operation, such as garbage collection, is executed, degradation of lifespan and/or reliability occurring on the storage device 310 while the recall function is enabled may be effectively reduced.

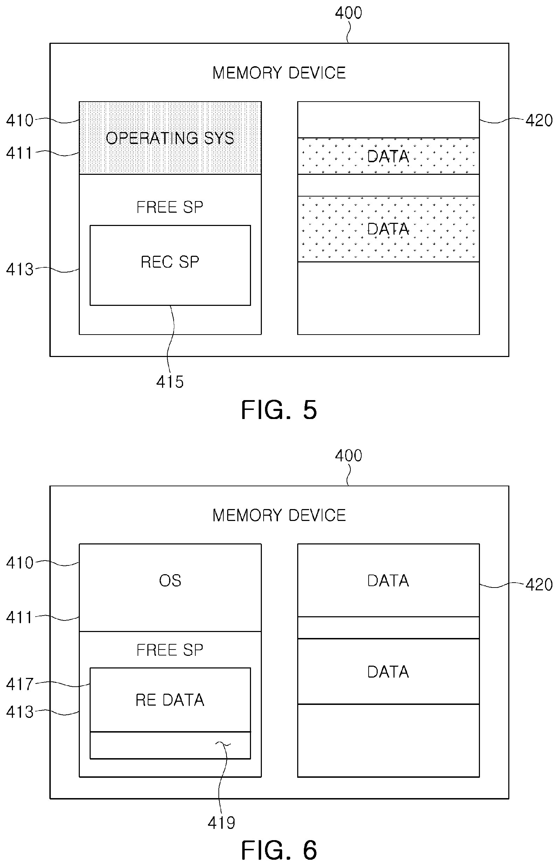

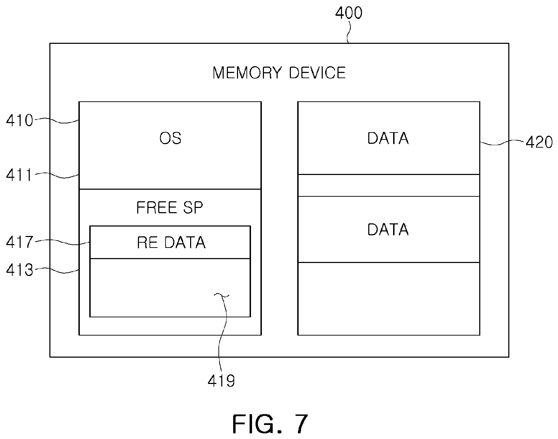

FIGS. 5 to 7 are diagrams illustrating operations of a storage device according to an example embodiment.

FIGS. 5 to 7 may be drawings illustrating whether a recall function is activated according to free space of a system partition in which an operating system is installed. The memory device 400 described with reference to FIGS. 5 to 7 may be a nonvolatile memory device included in a storage device. In the example embodiment described with reference to FIGS. 5 to 7, the memory device 400 may be divided into a first partition 410 and a second partition 420.

The first partition 410 may be a system partition in which an operating system 411 is installed, and the second partition 420 may be a partition used as a storage space for data. When a computing system including a storage device is booted, the operating system 411 installed in the first partition 410 may be loaded into a main memory (e.g. RAM) of the host device and may operate the computing system.

After the operating system 411 is loaded, the host device may determine whether to activate the recall function by checking capacity of the free space 413 of the first partition 410. The free space 413 of the first partition 410 may be a space in which the operating system 411 is not installed. The free space 413 of the first partition 410 may be a space in the first partition 410 which is empty. When the free space is greater than or equal to the reference free capacity, the recall function may be activated in the operating system 411 loaded on the host device. The reference free capacity required to activate the recall function may vary depending on the total capacity of the first partition 410. For example, when the total capacity of the first partition 410 is 256 GB, the reference free capacity may be 50 GB. In other words, when the free space 413 is 50 GB or more, the recall function may be activated in the operating system 411 loaded on the host device. When the total capacity of the first partition 410 is 512 GB, the reference free capacity may be 100 GB, and when the total capacity of the first partition 410 is 1 TB or more, the reference free capacity may be 175 GB. However, the reference free capacity may vary in example embodiments, and for example, when the total capacity of the first partition 410 is 256 GB, the reference free capacity may be determined to be less than 50 GB.

When the recall function is activated, the storage controller may define a recall space 415 in the first partition 410 to store recall data 417 in response to a recall function activation notification from the host device. The capacity of the recall space 415 may be determined by the reference free capacity. The host device may generate recall data 417 once every few seconds to tens of seconds and transmit the data to the storage device.

The recall data 417 may include snapshot data and metadata. The snapshot data may include image data captured from a screen displayed by an executing application, text data extracted from the image data captured by the screen, or the like, as described above. As the recall data 417 is stored, a capacity of the remaining space 419 (e.g. free space remaining in the recall space 416) may gradually decrease as illustrated in FIG. 6.

When the capacity of the remaining space 419 decreases, the host device may deactivate the recall function. For example, when the capacity of the free space 413 in the first partition 410 becomes smaller than a predetermined minimum free capacity, the host device may deactivate the recall function. The total capacity of the free space 413 may include the capacity of the remaining space 419. When the capacity of the free space 413 increases more than a resume reference space, which is greater than the minimum free capacity, while the recall function is deactivated, the recall function may be reactivated. In an example embodiment, the minimum free capacity may be determined to be 10% (e.g. approximately 10%) of the total capacity of the first partition 410. For example, when the total capacity of the first partition 410 is 256 GB, the minimum free capacity is 25 GB, and the resume reference capacity required to reactivate the deactivated recall function may be 30 GB. For example, the resume free capacity may be greater than the minimum free capacity.

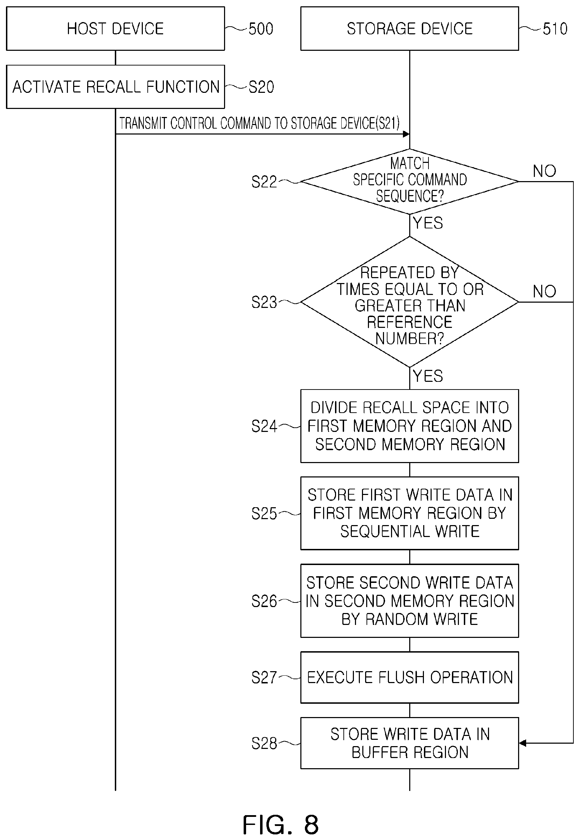

FIG. 8 is a diagram illustrating operations of a computing system according to an example embodiment.

Referring to FIG. 8, a computing system according to an example embodiment may include a host device 500 and a storage device 510. The host device 500 and the storage device 510 may be connected to each other by an interface such as PCI-Express, USB, SATA, or M-Phy for UFS, and the storage device 510 may store data or may output stored data in response to a control command received from the host device 500.

The host device 500 may activate a recall function (S20). As described above, when the recall function is activated, recall data captured by an application executing in the host device 500 may be generated and the recall data may be stored in the storage device 510. The recall data may include image data captured by the screen, and text data extracted from the image data captured by the screen.

The host device 500 may transmit a control command to the storage device 510 (S21). The storage controller of the storage device 510 may determine whether the transmission order of the control command received from the host device 500 matches a specific command sequence (S22). Operation S22 may include determining whether the control command transmitted from the host device 500 to the storage device 510 in operation S21 is a control command for storing recall data.

For example, the control command for storing recall data may include a first write command instructing a first write operation for writing first write data, a second write command instructing a second write operation for writing second write data, and a flush command instructing a flush operation in sequence. The first write data may be snapshot data and the second write data may be metadata, and accordingly, capacity of the first write data may be greater than capacity of the second write data.

However, in example embodiments, the host device 500 may directly inform the storage device 510 that the control command is for storing recall data. In this case, the storage device 510 may determine, instead of the command sequence, whether the control command received from the host device 500 in operation S21 includes a command instructing storing the recall data.

As a result of determination in operation S22, when the transmission order of the control command received by the storage device 510 in operation S21 does not match the command sequence, the storage controller may determine that the control command received in operation S21 is not a control command for storing recall data. Accordingly, the storage controller may write the write data received together with the control command to the buffer region (S28). The buffer region may be a region controlled in an SLC method, and the write data written in the buffer region may be moved to another region later according to the migration policy of the storage device 510.

As a result of determination in operation S22 that the transmission order of the control command received from the host device 500 to the storage device 510 matches the command sequence, the storage controller may further determine whether the number of times the control command is received in the transmission order matching the command sequence is equal to or greater than a reference number (S23). The reference number in operation S23 may be, for example, 3. When the number of times the control command is received in the transmission order matching the command sequence in operation S23 is less than the reference number, the storage device 510 may determine that the control command received from the host device 500 in operation S21 is not a control command for storing recall data. Accordingly, the storage controller may write the write data received together with the control command in the buffer region (S28).

When the number of times the control command is received in the transmission order matching the command sequence in operation S23 is equal to or greater than the reference number, the storage controller may determine that the control command received from the host device 500 instructs storing of recall data. The storage controller may define a recall space in the system partition of a nonvolatile memory device included in the storage device, and may divide the recall space into a first memory region and a second memory region (S24).

The storage controller may write 2 or more bits of data to each of a plurality of first memory cells included in the first memory region, and may write 1 bit of data to each of a plurality of second memory cells included in the second memory region. Accordingly, the first memory region may operate in one of the MLC, TLC, and QLC methods, and the second memory region may operate in the SLC method.

The storage controller may store the first write data corresponding to the snapshot data among the recall data in the first memory region by sequential write in response to the first write command received from the host device 500 (S25). The host device 500 may also designate the write method of the first write data as random write in the first write command instructing storing of the first write data, which is the snapshot data. However, in an example embodiment, regardless of whether the host device 500 designates the write method of the first write data as random write, the storage controller may write the first write data in the first memory region by sequential write. A random write operation may write data to non-sequential (e.g. non-contiguous (e.g. fragmented)) memory locations (e.g. logical addresses). A sequential write may write data to sequential (e.g. contiguous and linear) memory locations (e.g. logical addresses).

Thereafter, the storage controller may store the second write data corresponding to the metadata among the recall data to the second memory region by random write in response to the second write command received from the host device 500 (S26). Thereafter, the storage controller may execute a flush operation (S27) of moving data stored in a RAM device in the storage device 510, and/or a host memory allocated from the host device 500 to a nonvolatile memory device in response to a flush command received from the host device 500.

As described above, in an example embodiment, the storage controller may determine whether an operation instructed by a control command transmitted from the host device 500 is an operation instructing the writing of recall data. The storage controller may determine whether a control command instructing the writing of recall data is received from the host device 500 using a unique command sequence appearing in the control command instructing the writing of recall data.

When it is determined that a control command instructing the writing of recall data is received, the storage controller may directly write first write data corresponding to snapshot data in the first memory region in a sequential write manner, regardless of the instruction of the host device 500. In other words, the first write data may be written directly to the first memory region without going through the second memory region, which may operate in the SLC method and may function as a buffer region. Accordingly, the background operation for moving the first write data written in the second memory region to the first memory region need not be performed, and the increase in WAF of the storage device 510 due to activation of the recall function may be reduced.

Also, even when the host device 500 instructs the writing of the first write data by random write, in an example embodiment, the storage controller may write the first write data by sequential write. Accordingly, the number of times background operations, such as garbage collection, are executed may be reduced, and the increase in WAF of the storage device 510 may be suppressed and lifespan and reliability may be improved.

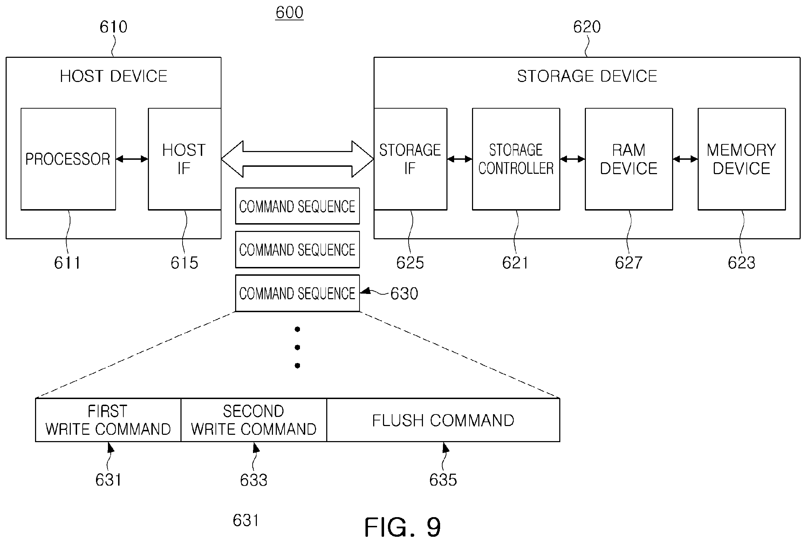

FIG. 9 is a diagram illustrating operations of a computing system according to an example embodiment.

Referring to FIG. 9, a computing system 600 according to an example embodiment may include a host device 610 and a storage device 620. The host device 610 may include a processor 611 and a host interface 615, and the storage device 620 may include a storage controller 621, a memory device 623, a storage interface 625, and a RAM device 627.

When the processor 611 transmits a control command through the host interface 615 to the storage device 620, the storage controller 621 may receive the control command through the storage interface 625, and may control the memory device 623 and the RAM device 627 in response to the received control command. Also, the storage controller 621 may execute a background operation autonomously even when the storage controller 621 does not receive a control command through the storage interface 625. The background operation executed on the storage device 620 without intervention of the host device 610 may include operation of redistributing a storage space of data stored in the memory device 623, such as garbage collection.

As described above, the host device 610 may load the operating system installed in the memory device 623 and may perform the boot process, and when the boot process is completed, the host device 610 may determine whether to activate the recall function based on the free space of the memory device 623. For example, whether to activate the recall function may be determined based on the capacity of the free space of the system partition in which the operating system is installed in the memory device 623.

When the capacity of the free space of the system partition is determined to be sufficient and the recall function is activated, the host device 610 may generate recall data once every several seconds to several tens of seconds and transmit the recall data to the storage device 620. The recall data may include snapshot data, metadata, or the like, generated by capturing a screen displayed on a display by an application executing in the computing system 600.

For example, the host device 610 may first transmit a first write command 631 instructing writing of snapshot data to the storage device 620, and may transmit a second write command 633 instructing writing of metadata to the storage device 620. After the second write command 633 is transmitted, a flush command 635 instructing a flush operation may be transmitted to the storage device 620.

Each of the first write command 631 and the second write command 633 may instruct a random write of each of the snapshot data and the metadata. Also, the snapshot data and the metadata may be stored in a buffer region controlled by the SLC method in the memory device 623, and may be moved to another memory region controlled by at least one of the MLC, TLC, and QLC methods in accordance with a migration policy.

However, when the snapshot data and the metadata are stored in the above manner, the number of times the storage device 620 executes a background operation may significantly increase. As described above, the background operation may be an operation executed in the storage device 620 without intervention of the host device 610. When the snapshot data and the metadata are stored in the buffer region by random write and are moved and stored in another memory region according to the migration policy, the number of times the storage device 620 executes a background operation may inevitably increase, and accordingly, the WAF of the storage device 620 may increase and lifespan and reliability may deteriorate.

According to an example embodiment, the storage device 620 may determine whether a control command received from the host device 610 is a control command generated by the recall function based on a command sequence 630, which is the order in which the control commands are received from the host device 610. For example, as illustrated in FIG. 9, when the command sequence 630 in which the first write command 631, the second write command 633, and the flush command 635 are transmitted in sequence is repeated more than a predetermined reference number, the storage controller 621 may determine that control commands 631, 633 and 635 included in the command sequence 630 are generated by the recall function. In an example embodiment, the reference number may be 3.

To determine whether the control commands 631, 633 and 635 included in the command sequence 630 are generated by the recall function, the storage controller 621 may refer to the transmission order of the control commands 631, 633 and 635, the capacity of the first write data instructed by the first write command 631 to be written, and the capacity of the second write data instructed by the second write command 633 to be written. For example, the first write data may correspond to snapshot data and may have capacity of tens to hundreds of KB, for example, capacity of 10 KB to 500 KB. The second write data may correspond to metadata and may have capacity of several tens to KB, for example, capacity of 4 KB to 12 KB. When the capacity of the first write data received together with the first write command 631 and the capacity of the second write data received together with the second write command 633 match the above range, the storage controller 621 may determine that the control commands 631, 633 and 635 included in the command sequence 630 were generated by the recall function.

Also, the storage device 620 may refer to the capacity of the free space of the system partition to determine whether the control commands 631, 633 and 635 included in the command sequence 630 are generated by the recall function. As described above, the recall function may be activated only when the capacity of the free space of the system partition is greater than a predetermined capacity.

For example, when the total capacity of the system partition is 256 GB, the recall function may be activated when the capacity of the free space is greater than 50 GB, and the recall function may be deactivated when the capacity of the free space is less than 25 GB. In the above condition, 50 GB may be defined as a reference free capacity determining whether the recall function is activated after booting of the host device 610, and 25 GB may be defined as the minimum free capacity determining whether the recall function is suspended after being activated.

In an example embodiment, after the capacity of the free space of the system partition decreases below the minimum free capacity and the recall function is deactivated, when the capacity of the free space of the system partition increases again above the resume reference capacity, the recall function may be activated again. When the total capacity of the system partition is 256 GB, the resume reference capacity may be 30 GB.

The storage controller 621 may determine whether the recall function is activated in the host device 610 by referring to the capacity of the free space of the system partition. When it is determined that the recall function is in a deactivated state in the host device 610, even when a command sequence 630 including a first write command 631, a second write command 633, and a flush command 635 in sequence is received from the host device 610, the first write data and the second write data may be written in the memory device 623 in random write manner.

For example, when the remaining capacity of the recall space allocated to store the recall data in the system partition is less than the minimum free capacity, the storage controller 621 may determine that the command sequence 630 including a first write command 631, a second write command 633, and a flush command 635 in sequence is not a command for writing the recall data. Accordingly, the storage controller 621 may write the first write data and the second write data in the memory device 623 according to instructions of the first write command 631 and the second write command 633. For example, the first write data and the second write data may be written by random write in the buffer region controlled by the SLC method.

When the recall function is determined to be activated in the host device 610, the storage controller 621 may write the first write data in the first memory region of the memory device 623 by sequential write, and the second write data may be written in the second memory region of the memory device 623 by random write. The first memory region may be controlled by one of the MLC, TLC, and QLC methods, and the second memory region may be controlled by the SLC method.

In an example embodiment, when the command sequence 630 including the first write command 631, the second write command 633, and the flush command 635 is received three or more times from the host device 610 in sequence, the capacity of the first write data is tens to hundreds of KB and the capacity of the second write data is several to tens of KB, and the capacity of the free space of the system partition is larger than the reference free capacity which may activate the recall function, the storage controller 621 may write the first write data in the memory device 623 by sequential write and the second write data in the memory device 623 by random write. Even when the first write command instructs random write, the storage controller 621 may write the first write data received together with the first write command to the memory device 623 by sequential write when the above conditions are satisfied. Accordingly, the number of times garbage collections to be executed may be reduced by writing the first write data, which is the snapshot data generated by the recall function, in the memory device 623 by sequential write.

In an example embodiment, the storage controller 621 may directly write the first write data in the first memory region controlled by one of the MLC, TLC, and QLC methods, which may indicate that the first write data is written directly in the first memory region without passing through the buffer region controlled by the SLC method. Accordingly, as compared to the method of first writing the first write data in the buffer region and later moving the first write data in the first memory region by the migration policy, the number of times the background operation is executed in the storage device 620 may be reduced.

In an example embodiment, when the write data received from the host device 610 along with the write command is determined as the recall data, by writing the first write data corresponding to the snapshot data among the write data in the first memory region by sequential write, the number of times the background operation including the garbage collection is executed may be reduced. Accordingly, while the recall function is activated on the host device 610, the WAF increase on the storage device 620 may be reduced, and lifespan, reliability of the storage device 620 may be improved.

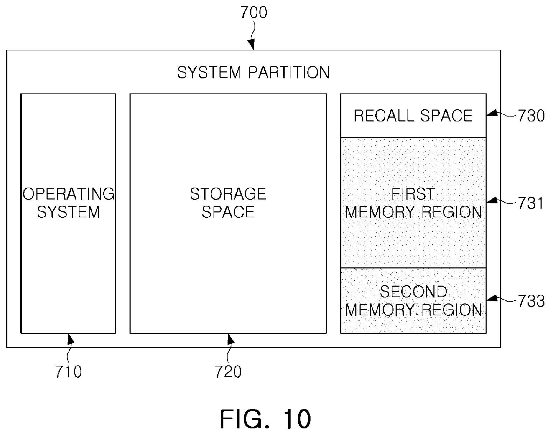

FIG. 10 is a diagram illustrating operations of a storage device according to an example embodiment.

FIG. 10 is a drawing roughly illustrating a system partition 700 defined in a memory device of a storage device according to an example embodiment. The system partition 700 may correspond to each of the first partitions 410 of FIGS. 5 to 7. Referring to FIG. 10, an operating system 710 may be installed in the system partition 700, and the remaining space after the operating system 710 is installed may be defined as a storage space 720 and a recall space 730.

Whether to activate the recall function in the host device connected to the storage device may be determined depending on the capacity of the remaining space after the operating system 710 is installed in the system partition 700. For example, when the capacity of the free space is greater than the reference free capacity determined according to the total capacity of the system partition 700, the recall function may be activated. When the recall function is activated, a recall space 730 may be defined in the system partition 700.

The reference free capacity may be determined to be a certain percentage (e.g. a predefined percentage) of the total capacity of the system partition 700. For instance, the reference free capacity may be determined to be approximately 20% of the total capacity of the system partition 700. For example, when the total capacity of system partition 700 is 256 GB, the reference free capacity may be 50 GB, when the total capacity of system partition 700 is 512 GB, the reference free capacity may be 100 GB, and when the total capacity of system partition 700 is 1 TB or more, the reference free capacity may be 175 GB.

When the capacity of the remaining space after the operating system 710 is installed is greater than or equal to the reference free capacity, as the recall function is activated, the storage space 720 and the recall space 730 may be defined. For example, the storage space 720 and the recall space 730 may be logically separated in free space.

Referring to FIG. 10, the recall space 730 may include a first memory region 731 and a second memory region 733. The first memory region 731 and the second memory region 733 may be logically separated regions. A plurality of first memory cells included in the first memory region 731 may store more than 2 bits of data, and a plurality of second memory cells included in the second memory region 733 may store 1 bit of data. In other words, each of the plurality of first memory cells may operate by one of the MLC, TLC, and QLC methods, and each of the plurality of second memory cells may operate by the SLC method. In example embodiments, the capacity of the second memory region 733 may be equal to or less than the capacity of the first memory region 731.

The storage controller may distinguish snapshot data and metadata generated by the recall function and may store the data in the first memory region 731 and the second memory region 733. For example, the snapshot data may be stored in the first memory region 731 by sequential write, and the metadata may be stored in the second memory region 733 by random write. By storing the snapshot data in the first memory region 731 by sequential write, the number of times the background operation including garbage collection is executed may be reduced, and the increase in WAF of the storage device may be effectively suppressed.

The second memory region 733 may be defined as a spare region, differently from the first memory region 731 in which the snapshot data is stored. Metadata having capacity smaller than that of snapshot data may be written in a meta region included in the second memory region 733 by random write. For example, the meta region may have capacity of several hundred MB.

The recall function may be deactivated according to the remaining capacity of the system partition 700. For example, when the remaining capacity of the system partition 700 becomes smaller than a predetermined minimum free capacity, the recall function may be deactivated. The deactivated recall function may be reactivated when the remaining capacity of the system partition 700 increases to the resume reference capacity or more. The resume reference capacity may be larger than the minimum free capacity.

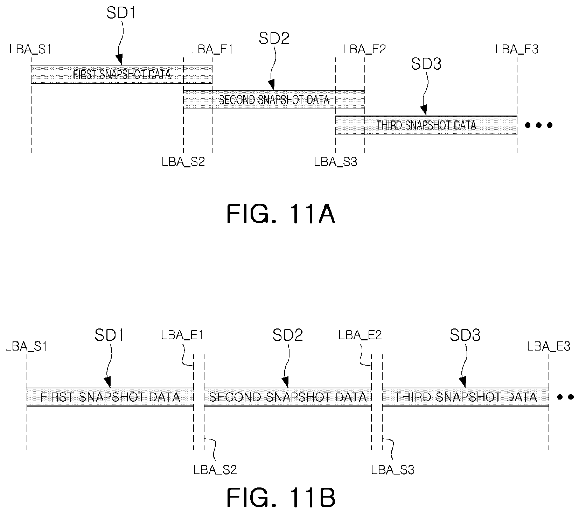

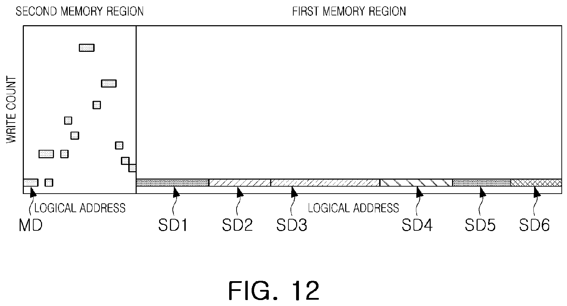

FIGS. 11A, 11B and 12 are diagrams illustrating operations of a storage device according to an example embodiment.

FIG. 11A and FIG. 11B are drawings illustrating the method by which snapshot data SD1-SD3 are stored in a state in which the recall function is activated. FIG. 11A is a drawing illustrating an operation of writing snapshot data SD1-SD3 in a random write manner, and FIG. 11B is a drawing illustrating an operation of writing snapshot data SD1-SD3 in a sequential write manner.

In a state in which the recall function is activated, the host device may generate the snapshot data SD1-SD3 at intervals of several seconds to tens of seconds and may transmit the data to the storage device together with a write command. The host device may transmit the snapshot data SD1-SD3 to the storage device together with a write command by setting random write as a default. The operation when writing snapshot data SD1-SD3 in a random write manner may be the same as FIG. 11A.

Referring to FIG. 11A, the first snapshot data SD1 may be written to a first storage space corresponding to a region between a first start logical address LBA_S1 and a first end logical address LBA_E1. The second snapshot data SD2 may be written to a second storage space corresponding to a region between a second start logical address LBA_S2 and a second end logical address LBA_E2, and the third snapshot data SD3 may be written to a third storage space corresponding to a region between a third start logical address LBA_S3 and a third end logical address LBA_E3. The sizes of the snapshot data SD1-SD3 may be different from each other, and accordingly, capacities of the first to third storage spaces may also be different from each other.

As illustrated in FIG. 11A, the first storage space and the second storage space may partially overlap each other, and the second storage space and the third storage space may also partially overlap each other. For example, the second start logical address LBA_S2 may be an address between the first start logical address LBA_S1 and the first end logical address LBA_E1, and the third start logical address LBA_S3 may be an address between the second start logical address LBA_S2 and the second end logical address LBA_E2. In an example embodiment, the capacity in which the first storage space and the second storage space overlap, and the capacity in which the second storage space and the third storage space overlap, may be 4KB.

In an example embodiment, a write operation of writing the snapshot data SD1-SD3 by random write instructed from a host device in which the recall function is activated may be executed in a manner in which a portion of consecutive storage spaces overlap, not by completely random write. By this random write, 4KB of storage space may be ensured each time a piece of the snapshot data SD1-SD3 is written. Consequently, the frequency of the background operations of the storage device may increase, such that the WAF may increase.

In an example embodiment, the snapshot data SD1-SD3 may be written by sequential write regardless of the random write instructed by the host device in which the recall function is activated. Referring to FIG. 11B, the first snapshot data SD1 may be written to the first storage space corresponding to the region between the first start logical address LBA_S1 and the first end logical address LBA_E1. The second snapshot data SD2 may be written in the second storage space corresponding to the region between the second start logical address LBA_S2 and the second end logical address LBA_E2, and third snapshot data SD3 may be written in the third storage space corresponding to the region between the third start logical address LBA_S3 and the third end logical address LBA_E3.

The second start logical address LBA_S2 may be the address immediately following the first end logical address LBA_E1, and the third start logical address LBA_S3 may be the address immediately following the second end logical address LBA_E2. By writing the snapshot data SD1-SD3 by sequential write, the number of times the background operation including garbage collection are executed may be reduced, and the increase in WAF of the storage device may be suppressed.

FIG. 12 is a diagram illustrating a method of storing data in each of a first memory region and a second memory region, logically separated from each other in a recall space in which recall data is stored. Referring to FIG. 12, snapshot data SD1-SD6 may be written in the first memory region in a sequential write manner, and metadata MD may be written in the second memory region in a random write manner. Accordingly, as illustrated in FIG. 12, the metadata MD may be written multiple times in a portion of a logical address of the second memory region.

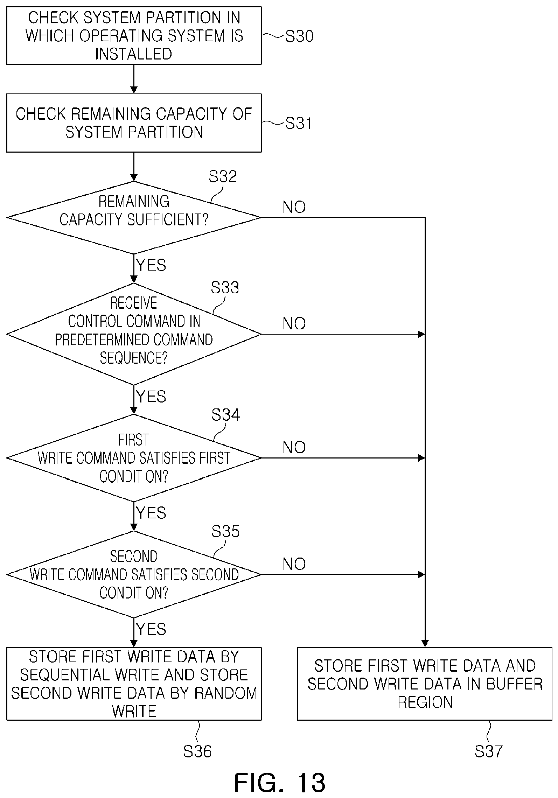

FIG. 13 is a diagram illustrating an operation method of a storage device according to an example embodiment.

Referring to FIG. 13, an operation method of a storage device according to an example embodiment may start with checking, by a storage controller, a system partition in which an operating system is installed (S30). For example, the storage device may be included in a computing system together with an external host device, and an operating system may be installed in a system partition of a memory device included in the storage device. For example, the host device may load the operating system stored in the system partition of the storage device and may execute a boot process.

The storage controller may check the remaining capacity of the system partition (S31), and may determine whether the remaining capacity of the system partition is sufficient by comparing the remaining capacity of the system partition with a predetermined reference free capacity, for example (S32). In operation S32, when the remaining capacity of the system partition is equal to or greater than the reference free capacity, it may be determined that the remaining capacity of the system partition is sufficient. For example, under the condition in which the remaining capacity of the system partition is equal to or greater than the reference free capacity, the host device may activate a recall function of generating recall data at an interval of several seconds to several tens of seconds, and a recall space in which recall data is stored in the system partition of the storage device may be defined depending on activation of the recall function.

The storage controller may control the storage device in response to a control command received from the host device. The storage controller may determine whether the control command received from the host device corresponds to a predetermined command sequence (S33). For example, when a first write command and a second write command are included in the command sequence in order, the capacity of the first write data, which is a write target of the first write command, is greater than the capacity of the second write data, which is a write target of the second write command, and each of the first write command and the second write command instructs random write, the storage controller may determine that the control command received from the host operation corresponds to the command sequence, which is the determination criterion of operation S33.

In example embodiments, a flush command transmitted after the second write command may be included in the command sequence. Also, in example embodiments, the storage controller may further determine whether the number of times receiving the control command according to the command sequence, which is the determination criterion of operation S33, is equal to or greater than the reference number.

When the result of determination in operation S33 is positive, the storage controller may determine whether the first write command satisfies the first condition (S34). The first condition, which is the determination criterion of the operation S34, may include whether a first logical address pointed to by the first write command belongs to the recall space, and may include, for example, whether the first logical address points to the first memory region in which snapshot data is stored in the recall space. In example embodiments, the first condition may include whether the first logical addresses pointed to by the first write commands received in sequence by the storage controller from the host device overlap each other.

When the result of determination in operation S34 is positive, the storage controller may determine whether the second write command satisfies the second condition (S35). The second condition in which is the determination criterion of operation S35 may include whether a second logical address pointed to by the second write command belongs to the recall space, and for example, the second condition may include whether the second logical address points to the second memory region in which metadata is stored in the recall space.

When the result of determination in each of operations S32 to S35 is positive, the storage controller may determine that the first write command and the second write command received from the host device command the writing of recall data. In response to the positive determinations of operations S32 to S35, the storage controller may store the first write data, which is snapshot data, in the first memory region by sequential write, and may store the second write data, which is metadata, in the second memory region by random write (S36). In example embodiments, migration may be prohibited for metadata written in the second memory region.

When the result of determination in at least one of operations S32 to S35 is negative, the storage controller may write each of the first write data and the second write data in a buffer region (S37). The buffer region may be logically separated from the first memory region and the second memory region, and may include memory cells operating in the SLC method. In operation S37, the first write data and the second write data stored in the buffer region may be moved and stored in memory cells operating by one of the MLC, TLC, and QLC methods according to the migration policy.

The execution order of operations S32 to S35 may vary in example embodiments. For example, after the determination in operation S33 is completed, operation S32 of determining whether the remaining capacity of the system partition is sufficient may be executed. Also, operation S34 and operation S35 of performing determination on each of the first write command and the second write command may be executed before operation S32 of checking the remaining capacity of the system partition.

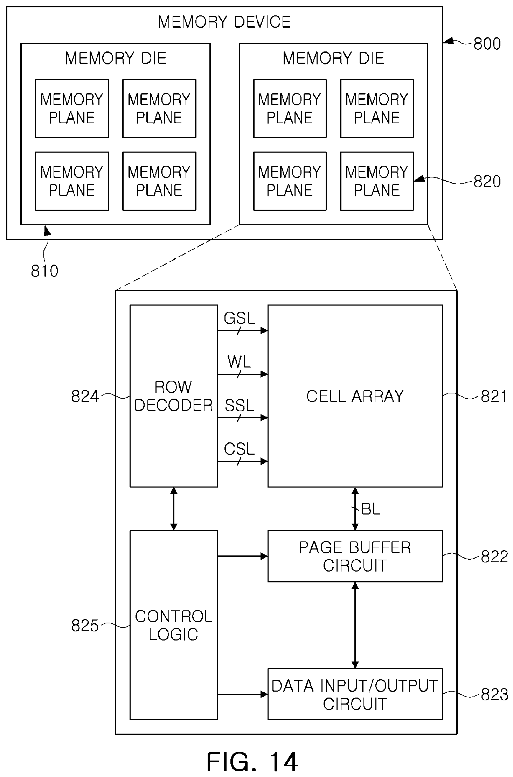

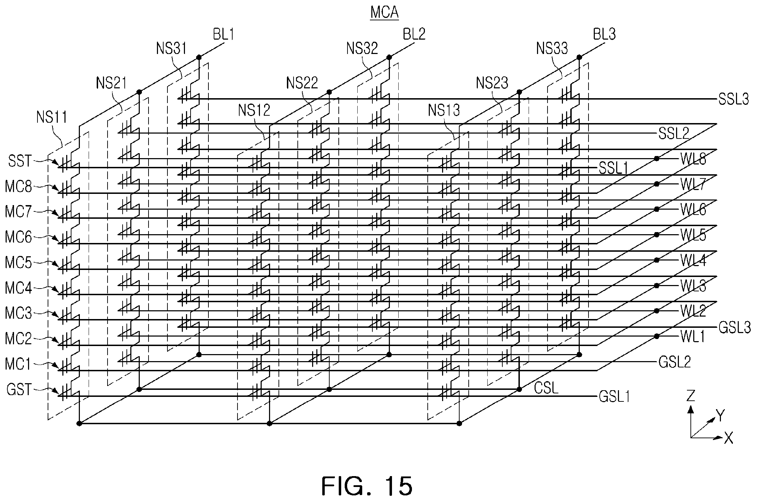

FIGS. 14 and 15 are diagrams illustrating a memory device included in a storage device according to an example embodiment.

Referring to FIG. 14, a memory device 800 according to an example embodiment may include a plurality of memory dies 810. The memory device 800 may correspond to the memory devices 12 of FIG. 1, the memory device 123 of FIG. 2, the memory device 223 of FIG. 3, the memory device 400 of FIGS. 5-7, or the memory device 623 of FIG. 9. Each of the plurality of memory dies 810 may include a plurality of memory planes 820, and each of the plurality of memory planes 820 may operate individually. Referring to FIG. 14, each of the plurality of memory planes 820 may include a cell region (or a cell array) 821 in which memory cells are disposed, and a peripheral circuit region controlling the cell region 821. In an example embodiment, the memory cells may be disposed in the cell region 821 in the form of a three-dimensional memory cell array.

The peripheral circuit region may include a page buffer circuit 822, a data input/output circuit 823, a row decoder 824, and a control logic circuit 825. The page buffer circuit 822 may be connected to the memory cells through a plurality of bitlines BL. The row decoder 824 may be connected to the memory cells through a plurality of wordlines WL, a plurality of ground select lines GSL, a plurality of string select lines SSL, and a plurality of common source lines CSL. The control logic circuit 825 may control the row decoder 824 and may determine at least one selected memory cell among the memory cells. The control logic circuit 825 may control the page buffer circuit 822 and may execute a program operation and a read operation for the selected memory cell.

The page buffer circuit 822 may include a plurality of page buffers connected to the plurality of bitlines BL, and the plurality of bitlines BL and the plurality of page buffers may correspond to each other. For example, one page buffer may be connected to one bitline BL. Data received from an external host through the data input/output circuit 823 may be stored in the memory cells through the page buffers, and data read from the memory cells by the page buffers may be output to a storage interface of the storage device including the memory device 800 through the data input/output circuit 823.

A memory cell array MCA illustrated in FIG. 15 may include a plurality of memory cells MC1-MC8 disposed in a three-dimensional structure. The plurality of memory cells MC1-MC8 may be stacked in a vertical direction (Z-axis direction) and may provide a plurality of NAND strings NS11, N21, N31, N12, N22, N32, N13, N23 and NS33, and the vertical direction may be a direction perpendicular to the upper surface of a substrate.

Referring to FIG. 15, the plurality of NAND strings NS11, N21, N31, N12, N22, N32, N13, N23 and NS33 may be connected between the bitlines BL1-BL3 and a common source line CSL in the vertical direction. Each of the plurality of NAND strings NS11, N21, N31, N12, N22, N32, N13, N23 and NS33 may include a string select transistor SST, a plurality of memory cells MC1-MC8 and a ground select transistor GST. In FIG. 15, each of the plurality of NAND strings NS11, N21, N31, N12, N22, N32, N13, N23 and NS33 may include eight memory cells MC1-MC8, but the number of memory cells MC1-MC8 may vary.

The string select transistor SST may be connected to corresponding string select lines SSL1-SSL3. The plurality of memory cells MC1-MC8 may be connected to corresponding wordlines WL1-WL8, respectively. In example embodiments, at least one of the wordlines WL1-WL8 may be provided as a dummy wordline. The ground select transistor GST may be connected to corresponding ground select lines GSL1-GSL3. The string select transistor SST may be connected to corresponding bitlines BL1-BL3, and the ground select transistor GST may be connected to the common source line CSL.

Memory cells disposed at the same level may be commonly connected to one wordline in the vertical direction, and at least a portion of the ground select lines GSL1-GSL3 and the string select lines SSL1-SSL3 may be separated from each other. For example, in an example embodiment illustrated in FIG. 15, the string select lines SSL1-SSL3 and the ground select lines GSL1-GSL3 disposed at the same level may be separated from each other. In FIG. 15, the memory cell array MCA may be connected to eight wordlines WL1-WL8 and three bitlines BL1-BL3, but the present invention is not limited thereto.

A memory cell array MCA having a three-dimensional structure as illustrated in FIG. 15 may be included in the cell region 821 of each of the memory planes 820. As described above, each of the memory planes 820 may operate individually, and for example, a portion of the memory planes 820 included in one memory die 810 may operate by an SLC method, and the other may operate by MLC, TLC, QLC methods. When a recall function is activated in a host device connected to a storage device, a memory plane 820 operating by an MLC, TLC, QLC method may be allocated as a first memory region in which snapshot data is written by sequential write, and a memory plane 820 operating in an SLC method may be allocated as a second memory region in which metadata is written by random write.

In example embodiments, a first memory region in which snapshot data is written by sequential write, and a second memory region in which metadata is written by random write may be defined in a single memory plane 820. For example, a portion of a plurality of memory blocks included in the memory plane 820 may be allocated to the first memory region, and the other portion may be allocated to the second memory region. Alternatively, the first memory region in which snapshot data is written by sequential write, and the second memory region in which metadata is written by random write may be defined on different memory dies 810.

According to the aforementioned example embodiments, the storage controller of a storage device may store snapshot data, which occupies a relatively large capacity among the data generated by a host device in which the recall function is activated, in a memory device using a sequential write method rather than a random write method specified by a command by the host device. Accordingly, the increase in WAF of the storage device in which the recall function is activated may be reduced, and reliability and lifespan of the storage device may be improved.

Embodiment are set out in the following Clauses:
Clause 1. An operation method of a storage device, the operation method comprising:
   receiving a command sequence including a first write command, a second write command, and a flush command from an external host device;
   comparing the number of times the command sequence is received with a reference number;
   comparing the remaining capacity of a system partition in which an operating system is installed in a memory device included in the storage device with a reference free capacity when the number of times receiving the command sequence is equal to or greater than the reference number; and
   when the remaining capacity is greater than or equal to the reference free capacity, storing first write data in a first memory region of the memory device by sequential write in response to the first write command, and storing second write data in a second memory region of the memory device by random write in response to the second write command.
Clause 2. The operation method of Clause 1, further comprising:
   when the number of times the command sequence is received is less than the reference number, storing the first write data and the second write data in a buffer region different from the first memory region and the second memory region.
Clause 3. The operation method of Clause 1 or Clause 2, further comprising:
   prohibiting migration of the second write data stored in the second memory region by random write.
Clause 4. The operation method of any preceding Clause, wherein the first memory region includes at least one of a multilevel cell (MLC), a triple level cell (TLC), and a quad level cell (QLC), and
   wherein the second memory region includes a single level cell (SLC).
Clause 5. The operation method of any preceding Clause, further comprising:
   when the remaining capacity is less than the minimum free capacity, storing the first write data and the second write data in a buffer region different from the first memory region and the second memory region.
Clause 6. The operation method of any preceding Clause, further comprising:
   when the number of times the command sequence is received is equal to or greater than the reference number and the remaining capacity is greater than or equal to the reference free capacity, determining whether a first logical address of the first write command points to the first memory region, and whether a second logical address of the second write command points to the second memory region.
Clause 7. The operation method of Clause 6, further comprising:
   when the first logical address is not pointed to the first memory region or the second logical address is not pointed to the second memory region, storing the first write data and the second write data in a buffer region different from the first memory region and the second memory region.
Clause 8. The operation method of Clause 6 or Clause 7, further comprising:
   when the number of times the command sequence is received is equal to or greater than the reference number and the remaining capacity is greater than or equal to the reference free capacity, determining whether the first logical addresses of the first write commands included in the command sequence overlap each other.
Clause 9. The operation method of Clause 8, further comprising:
   when the first logical addresses do not overlap each other, storing the first write data and the second write data in a buffer region different from the first memory region and the second memory region.
Clause 10. A computing system, comprising:
   a storage device including a memory device, a storage interface, and a storage controller; and
   a host device including a processor and a host interface connected to the storage interface,
   wherein the processor is configured to:
      execute a boot process by loading an operating system installed in a system partition of the memory device,
      activate a recall function of generating snapshot data and metadata obtained by capturing a screen displayed by an application executing on the host device, and
      transmit to the storage device a command sequence including a first write command instructing writing of the snapshot data and a second write command instructing writing of the metadata to the storage device, and
      wherein the storage controller is configured to:
         store the snapshot data in a first memory region of the system partition by sequential write,
         store the metadata in a second memory region of the system partition by random write, and
         prohibit migration of the metadata written in the second memory region.
Clause 11. The computer system of Clause 10, wherein the processor is configured to activate the recall function when the remaining capacity of the system partition is equal to or greater than a reference free capacity, and
   wherein the reference free capacity is determined based on the total capacity of the system partition.

While the example embodiments have been illustrated and described above, it will be configured as apparent to those skilled in the art that modifications and variations could be made without departing from the scope of the present invention as defined by the appended claims.

## Claims

1. A storage device, comprising:
a nonvolatile memory device (123) configured to store data;
a storage interface (125) configured to be connected to an external host device (110); and
a storage controller (121) configured to receive a command from the external host device (110) through the storage interface (125) and to control the nonvolatile memory device (123) in response to the command,
wherein, the storage device is configured such that, when the storage controller (121) receives a command sequence from the external host device (110) more than a reference number of times and the command sequence includes a first write command instructing a first write operation, a second write command instructing a second write operation, and a flush command instructing a flush operation:
the storage controller (121) executes the first write command by sequential write to store first write data in a first memory region of the nonvolatile memory device, and executes the second write command by random write to store second write data in a second memory region of the nonvolatile memory device.

2. The storage device of claim 1, wherein capacity of the first write data is greater than capacity of the second write data.

3. The storage device of claim 1 or claim 2, wherein the first write data is snapshot data generated by a recall function activated in an operating system installed in the nonvolatile memory device (123) and loaded into the external host device (110), and
wherein the second write data is metadata.

4. The storage device of claim 3, wherein the nonvolatile memory device (123) is configured to provide a recall space including the first memory region and the second memory region, and
wherein the recall space is defined in a system partition in which the operating system of the external host device (110) is installed.

5. The storage device of claim 4, wherein, the storage device is configured such that, when the remaining capacity of the system partition is less than a predetermined minimum free capacity:
the storage controller (121) stores the first write data and the second write data in a buffer region of the nonvolatile memory device different from the first memory region and the second memory region, in response to the command sequence received from the external host device (110).

6. The storage device of claim 5, wherein the storage controller (121) is configured to write 1 bit of each of the first write data and the second write data in each of a plurality of memory cells included in the buffer region.

7. The storage device of claim 6, wherein the storage controller (121) is configured to move the first write data and the second write data written in the buffer region to a data region of the nonvolatile memory device (123) different from the buffer region in accordance with a predetermined migration policy.

8. The storage device of any preceding claim, wherein the storage controller (121) is configured to store 2 or more bits of data in each of a plurality of first memory cells included in the first memory region, and store 1 bit of data in each of a plurality of second memory cells included in the second memory region.

9. The storage device of any preceding claim, further comprising:
a random access memory, RAM device (227),
wherein the flush operation is an operation of moving data stored in the RAM device (227) to the nonvolatile memory device (123).

10. An operation method of a storage device, the operation method comprising:
receiving (S21) a command sequence including a first write command, a second write command, and a flush command from an external host device;
comparing (S23) the number of times the command sequence is received with a reference number;
comparing (S31) the remaining capacity of a system partition in which an operating system is installed in a memory device included in the storage device with a reference free capacity when the number of times receiving the command sequence is equal to or greater than the reference number; and
when the remaining capacity is greater than or equal to the reference free capacity, storing (S25) first write data in a first memory region of the memory device by sequential write in response to the first write command, and storing (S26) second write data in a second memory region of the memory device by random write in response to the second write command.

11. The operation method of claim 10, further comprising:
when the number of times the command sequence is received is less than the reference number, storing (S28) the first write data and the second write data in a buffer region different from the first memory region and the second memory region.

12. The operation method of claim 10 or claim 11, further comprising:
prohibiting migration of the second write data stored in the second memory region by random write.

13. The operation method of any of claims 10-12, wherein the first memory region includes at least one of a multilevel cell, a triple level cell, and a quad level cell, and
wherein the second memory region includes a single level cell.

14. The operation method of any of claims 10-13, further comprising:
when the remaining capacity is less than the minimum free capacity, storing (S37) the first write data and the second write data in a buffer region different from the first memory region and the second memory region.

15. The operation method of any of claims 10-14, further comprising:
when the number of times the command sequence is received is equal to or greater than the reference number and the remaining capacity is greater than or equal to the reference free capacity, determining whether (S34) a first logical address of the first write command points to the first memory region, and whether (S35) a second logical address of the second write command points to the second memory region.
